# EUROPÄISCHE PATENTSCHRIFT

(11) **EP 3 021 262 B1**
(45) Veröffentlichungstag und Bekanntmachung des Hinweises auf die Patenterteilung: **11.12.2019**
(21) Anmeldenummer: 15003087.2
(22) Anmeldetag: 28.10.2015
(51) Int. Cl.: G06K 19/10, G06K 19/14

(54) **DATENTRÄGER MIT EINEM VERBORGENEN KENNZEICHEN**
DATA CARRIER WITH A HIDDEN LABEL
SUPPORT DE DONNÉES COMPRENANT UN INDICATEUR DISSIMULÉ

(30) Priorität: 17.11.2014 DE 102014016921
(43) Veröffentlichungstag der Anmeldung: 18.05.2016
(73) Patentinhaber: Giesecke+Devrient Mobile Security GmbH, 81677 München (DE)
(72) Erfinder: Günter, Endres, 81547 München (DE); Klaus, Kohl, 83714 Miesbach (DE)

(56) Entgegenhaltungen:
- EP-A1- 2 284 772
- WO-A1-2013/060877
- JP-A- 2007 026 145
- US-A1- 2012 055 999

## Beschreibung

Die Erfindung beschreibt einen tragbaren Datenträger mit einem mehrschichtigen Aufbau, der ein Kennzeichen aufweist.

Aus dem Stand der Technik sind mehrschichtige Datenträger, wie z.B. Chipkarten, SIM-Karten, Kreditkarten, Sozialversicherungskarten, Führerscheine, mit einer in wenigstens einem Teilbereich vorgesehenen Kennzeichen, z.B. ein Kopierschutzelement, bekannt, welches z.B. eine Metallschicht enthält. In das Kopierschutzelement sind weitere Merkmale z.B. über ein partielles Abtragen oder Verdampfen einer Metallschicht eingebracht.

Kennzeichen in Datenträgern, insbesondere verborgene Kennzeichen, erfordern zur Prüfung im allgemeinen ein externes Hilfsmittel, wie z.B. eine UV-Lichtquelle, Tageslicht oder eine andere geeignete starke Lichtquelle. Dies schränkt die Prüfbarkeit von Kennzeichen in Datenträgern ein, erhöht den Aufwand zur Prüfung und reduziert die Aktzeptanz der Kennzeichen bei potientiellen Kunden.

Ferner schränken Kennzeichen eine freie Gestaltbarkeit einer Oberfläche des Datenträgers ein, da ein Teil der Oberfläche für das Kennzeichen verloren geht.

US2012/0055999 A1 offenbart einen Tragbaren Datenträger mit einem mehrschichtigen Aufbau, der ein Kennzeichen aufweist, wobei der Datenträger im Inneren eine Lichtquelle aufweist, die unter dem Kennzeichen angeordnet ist.

WO2013/060877 A1 offenbart einen Tragbaren Datenträger mit einem mehrschichtigen Aufbau, der ein Kennzeichen aufweist, wobei der Datenträger im Inneren eine Lichtquelle aufweist, die unter dem Kennzeichen angeordnet ist, wobei das Kennzeichen nur bei Beleuchtung durch die Lichtquelle von außen sichtbar ist.

Ausgehend vom Stand der Technik ist es Aufgabe der Erfindung eine Lösung zu finden, welche die beschriebenen Nachteile vermeidet.

Es ist insbesondere die Aufgabe der Erfindung ein Kennzeichen für einen tragbaren Datenträger zur Verfügung zu stellen, das einfach zu prüfen und von außen gut erkennbar ist mit einer verbesserten Erkennung, aber dennoch die freie Gestaltbarkeit der Oberfläche des Datenträgers nicht einschränkt.

Die Aufgabe der Erfindung wird durch den unabhängigen Anspruch 1 gelöst.

Vorteilhafte Ausführungen sind in den abhängigen Ansprüchen beschrieben.

Zur Lösung der Aufgabe offenbart die Erfindung einen tragbaren Datenträger mit einem mehrschichtigen Aufbau, der ein Kennzeichen aufweist, wobei sich der Datenträger dadurch vom Stand der Technik unterscheidet, dass zwischen dem Kennzeichen und der Lichtquelle eine optische Schicht angeordnet ist, die eingerichtet ist, um das Licht der Lichtquelle gleichmäßig über zumindest einen Teil der Fläche des Kennzeichens zu verteilen.

Der große Vorteil der Erfindung ist, dass das Kennzeichen ohne externe Hilfsmittel geprüft werden kann, da zur Prüfung die Lichtquelle des Datenträgers alleine ausreicht. Das Kennzeichen wird nur dann für einen Betrachter sichtbar, wenn die Lichtquelle im Inneren des Datenträgers das Kennzeichen beleuchtet. Somit kann das Kennzeichen unter den verschiedensten Beleuchtungsverhältnissen geprüft werden, z.B. bei Tag oder Nacht. Ein weiterer Vorteil der Erfindung ist, dass die Oberfläche des Datenträgers frei gestaltbar ist, da das Kennzeichen nur dann für einen Betrachter sichtbar wird, wenn das Kennzeichen geprüft wird. Ansonsten kann die Oberfläche nach Belieben gestaltet werden. Für die Herstellung des Kennzeichens ist keine spezielle Vorrichtung notwendig, sondern kann mit bekannter Technologie ausgeführt werden.

Der Vorteil der optischen Schicht ist, dass das Licht der Lichtquelle gleichmäßig über die Fläche des Kennzeichens verteilt wird und damit ein Betrachter von außen ein gleichmäßig helles Kennzeichen erkennt, auch wenn das Licht von einer punktförmigen Lichtquelle erzeugt wird. Bei der optischen Schicht handelt es sich beispielsweise um eine sogenannte Diffusorfolie, die eine lichtstreuende Wirkung hat. Desweiteren können als optische Schicht eine Lichtsammlerfolie, abgekürzt mit LISA-Folie, oder andere für diesen Zweck geeignete Folien verwendet werden.

Ein weiteres vorteilhaftes Ausführungsbeispiel ist, dass die Dicke der optischen Schicht einen Abstand zwischen dem Kennzeichen und der Lichtquelle bestimmt, so dass das Licht der Lichtquelle gestreut oder gebündelt wird.

Ein weiterer Vorteil der Dicke der optischen Schicht ist, dass das Licht der Lichtquelle je nach Wunsch und Anwendung gleichmäßig auf das gesamte Kennzeichen verteilt werden kann, aber auch bestimmte Bereiche des Kennzeichens stärker beleuchtet werden können, indem das Licht auf bestimmte Bereiche fokusiert wird. Die optische Schicht übt dazu die Funktion einer optischen Linse aus.

Ein weiteres vorteilhaftes Ausführungsbeispiel ist, dass in der optischen Schicht Fluorpigmente angeordnet sind.

Fluorpigmente haben die vorteilhafte Eigenschaft, dass sie die Wellenlänge von Licht verändern und damit das Kennzeichen für einen Betrachter heller erscheint.

Ein weiteres vorteilhaftes Ausführungsbeispiel ist, dass das Kennzeichen durch mindestens eine Öffnung in einer lichtundurchlässigen Beschichtung gebildet wird.

Die Öffnung weist die geometrische Form der Kennzeichnung auf. Das Kennzeichen in Form der lichtundurchlässigen Beschichtung mit der dazugehörenden Öffnung ist vorteilhafterweise auf einem lichtdurchlässigen Bereich angeordnet, wobei der lichtdurchlässige Bereich in einer lichtundurchlässigen Schicht angeordnet ist.

Vorteilhafterweise besteht die lichtundurchlässige Beschichtung aus einer metallischen Schicht. Die metallische Schicht kann z.B. aufgedampft oder aufgedruckt sein. Die mindestens eine Öffnung in der geometrischen Form des Kennzeichens kann z.B. mittels eines Lasers einfach in die lichtundurchlässige Beschichtung eingebracht werden. Durch die Öffnung hindurch ist von außen das Licht der Lichtquelle für einen Benutzer in der geometrischen Form des Kennzeichens, z.B. in der Form eines Buchstabens, zu erkennen. Die lichtundurchlässige Beschichtung ist auf mindestens einer Seite des lichtdurchlässigen Bereichs angeordnet.

Ein weiteres vorteilhaftes Ausführungsbeispiel ist, dass das Kennzeichen in einem bestimmten Winkel in der lichtundurchlässigen Beschichtung angeordnet ist, so dass das Kennzeichen nur unter einem bestimmten Betrachtungswinkel für einen Betrachter zu erkennen ist.

Dies hat den Vorteil, dass somit ein einfaches Kopieren des Kennzeichens deutlich erschwert wird. Ferner kann die Erkennbarkeit des Kennzeichensunter einem bestimmten Winkel auch als Echtheitsmerkmal verwendet werden.

Ein weiteres vorteilhaftes Ausführungsbeispiel ist, dass das Kennzeichen ein Bild, eine Figur, ein Zeichen, ein Buchstabe, ein Wort, ein Symbol und/oder eine Zahl ist.

Vorteilhafterweise sind alle anderen geeigneten geometrischen Formen mittels des Kennzeichens realisierbar.

Ein weiteres vorteilhaftes Ausführungsbeispiel ist, dass das Kennzeichen ein Wasserzeichen oder ein Halbtonmuster ist.

Dies sind nur zwei Beispiele für ein mögliches Kennzeichen. Ein weiteres vorteilhaftes Beispiel wäre ein Hologramm.

Ein weiteres vorteilhaftes Ausführungsbeispiel ist, dass die lichtundurchlässige Schicht eine aufgedruckte Schicht ist.

Eine aufgedruckte Schicht ermöglicht eine einfache und kostengünstige Verarbeitung. Gleichwohl kann als lichtundurchlässige Schicht auch eine Folie verwendet werden.

Ein weiteres vorteilhaftes Ausführungsbeispiel ist, dass die lichtundurchlässige Schicht aus Metall besteht.

Neben Metall können alle anderen geeigneten Materialien verwendet werden, wie z.B. ein Kunststoff. Ein weiterer Vorteil von Metall ist, dass es mittels eines Aufdampf- oder eines Druck-verfahrens verarbeitet werden kann und damit sehr dünne Schichten erzielt werden können.

Ein weiteres vorteilhaftes Ausführungsbeispiel ist, dass eine Antennenspule im Datenträger angeordnet ist, wobei die Antennenspule zur Energieversorgung und als kontaktlose Schnittstelle zur Datenübertragung dient.

Ein weiteres vorteilhaftes Ausführungsbeispiel ist, dass die Antennenspule gedruckt oder gewickelt ist.

Ein weiteres vorteilhaftes Ausführungsbeispiel ist, dass die Lichtquelle eine Leuchtdiode oder eine organische Leuchtdiode oder eine flächige lichtemittiernde Substanz ist.

Ein weiteres vorteilhaftes Ausführungsbeispiel ist, dass der Datenträger einen Chip zur Datenverarbeitung aufweist.

Ein weiteres vorteilhaftes Ausführungsbeispiel ist, dass der Datenträger eine kontaktgebundene Schnittstelle zur Datenübertragung aufweist.

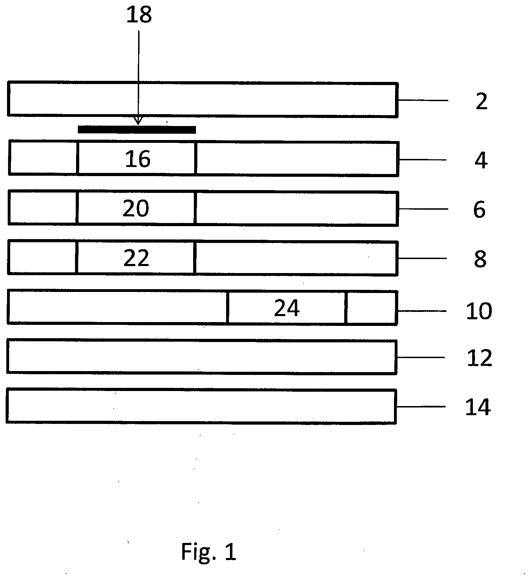

Im Folgenden wird ein Ausführungsbeispiel der Erfindung anhand der beigefügten Figur 1 beschrieben.

Figur 1 zeigt eine Schnittansicht eines erfindungsgemäßen tragbaren Datenträgers. Der Datenträger weist außen jeweils eine lichtdurchlässige Schicht 2 und 14 auf. Im Inneren des Datenträgers sind lichtundurchlässige Schichten 4 bis 12 angeordnet. Die Schichten 2 bis 14 sind vorzugsweise Folienschichten, die mittels Laminierung dauerhaft miteinander verbunden werden. In der Schicht 8 befindet sich eine Lichtquelle 22. Die Lichtquelle 22 kann z.B. eine Leuchtdiode sein. Die Lichtquelle 22 emittiert Licht, das durch eine optische Schicht 20 gleichmäßig verteilt wird. Die optische Schicht 20 ist in der Schicht 6 angeordnet. Das Licht der Lichtquelle 22 durchläuft einen weiteren optionalen lichtdurchlässigen Bereich 16 und trifft auf ein erfindungsgemäßes Kennzeichen 18. Der lichtdurchlässige Bereich 16 kann optional eine zweite optische Schicht, wie die Schicht 20, sein. Das Kennzeichen 18 ist in einer lichtundurchlässigen Beschichtung angeordnet. Die lichtundurchlässige Beschichtung ist z.B. eine metallische Schicht, die aufgedruckt oder aufgedampft ist. In der lichtundurchlässigen Beschichtung ist mindestens eine Öffnung angeordnet, durch die das Licht der Lichtquelle 22 nach außen gelangt und von einem Betrachter in Form der mindestens einen Öffnung des Kennzeichens 18 wahrgenommen wird. Ferner kann das nKenzeichen 18 so in der lichtundurchlässigen Beschichtung angeordnet sein, dass ein Betrachter das Kenzeichen 18 nur unter einem bestimmten Winkel erkennt. Das Kennzeichen 18 kann jede beliebige geometrische Form aufweisen, z.B. ein Bild, einen Buchstaben, ein Symbol, ein Zeichen, ein Wort, etc..

Alternativ kann das Kennzeichen 18 auch in einer lichtundurchlässigen Schicht, wie z.B. 4, 6 oder 8 ausgebildet sein. Dazu ist dann die entsprechende mindestens eine Öffnung für das Kennzeichen 18 in die entsprechende Schicht einzubringen, z.B. mittels Laser. Optional kann die Öffnung für das Kennzeichen 18 leer bleiben oder gefüllt werden, z. B. mit einem lichtdurchlässigen Material, das z.B. zusätzlich Pigmente für einen optischen Effekt aufweist.

In der Schicht 10 ist ferner ein Chip 24 angeordnet, der zur Verarbeitung von Daten dient. Beispielsweise kann der Chip die Lichtquelle 22 ein- und ausschalten. Darüberhinaus ist noch eine hier nicht dargestellte Antennenspule im Datenträger angeordnet, die zur Energieversorgung der Lichtquelle 22 und des Chips 24 dient. Ferner kann die Antennenspule auch zur Datenübertragung verwendet werden.

### Bezugszeichenliste

- 2: lichtdurchlässige Schicht
- 4: lichtundurchlässige Schicht
- 6: lichtundurchlässige Schicht
- 8: lichtundurchlässige Schicht
- 10: lichtundurchlässige Schicht
- 12: lichtundurchlässige Schicht
- 14: lichtdurchlässige Schicht
- 16: lichtdurchlässiger Bereich
- 18: Kennzeichen, z.B. in Form einer lichtundurchlässigen Beschichtung
- 20: optische Schicht
- 22: Lichtquelle
- 24: Chip

## Patentansprüche

1. Tragbarer Datenträger mit einem mehrschichtigen Aufbau, der ein Kennzeichen (18) aufweist, wobei der Datenträger im Inneren eine Lichtquelle (22) aufweist, die unter dem Kennzeichen (18) angeordnet ist, wobei das Kennzeichen (18) nur bei Beleuchtung durch die Lichtquelle (22) von außen sichtbar ist,
**dadurch gekennzeichnet, dass** zwischen dem Kennzeichen (18) und der Lichtquelle (22) eine optische Schicht (20) angeordnet ist, die eingerichtet ist, um das Licht der Lichtquelle (22) gleichmäßig über zumindest einen Teil der Fläche des Kennzeichens (18) zu verteilen.

2. Datenträger nach Anspruch 1, **dadurch gekennzeichnet, dass** die Dicke der optischen Schicht (20) einen Abstand zwischen dem Kennzeichen (18) und der Lichtquelle (22) bestimmt, so dass das Licht der Lichtquelle (22) gestreut oder gebündelt wird.

3. Datenträger nach einem der vorhergehenden Ansprüche, **dadurch gekennzeichnet, dass** in der optischen Schicht (20) Fluorpigmente angeordnet sind.

4. Datenträger nach einem der vorhergehenden Ansprüche, **dadurch gekennzeichnet, dass** das Kennzeichen (18) durch mindestens eine Öffnung in einer lichtundurchlässigen Beschichtung gebildet wird.

5. Datenträger nach einem der vorhergehenden Ansprüche, **dadurch gekennzeichnet, dass** das Kennzeichen (18) in einem bestimmten Winkel in der lichtundurchlässigen Beschichtung angeordnet ist, so dass das Kennzeichen (18) nur unter einem bestimmten Betrachtungswinkel für einen Betrachter zu erkennen ist.

6. Datenträger nach einem der vorhergehenden Ansprüche, **dadurch gekennzeichnet, dass** das Kennzeichen (18) ein Bild, eine Figur, ein Zeichen, ein Buchstabe, ein Wort, ein Symbol und/oder eine Zahl ist.

7. Datenträger nach einem der vorhergehenden Ansprüche, **dadurch gekennzeichnet, dass** das Kennzeichen (18) ein Wasserzeichen oder ein Halbtonmuster ist.

8. Datenträger nach einem der vorhergehenden Ansprüche, **dadurch gekennzeichnet, dass** die lichtundurchlässige Schicht (4, 6, 8, 10, 12) eine aufgedruckte Schicht ist.

9. Datenträger nach einem der vorhergehenden Ansprüche, **dadurch gekennzeichnet, dass** die lichtundurchlässige Schicht (4, 6, 8, 10, 12) aus Metall besteht.

10. Datenträger nach einem der vorhergehenden Ansprüche, **dadurch gekennzeichnet, dass** eine Antennenspule im Datenträger angeordnet ist, wobei die Antennenspule zur Energieversorung und als kontaktlose Schnittstelle zur Datenübertragung dient.

11. Datenträger nach einem der vorhergehenden Ansprüche, **dadurch gekennzeichnet, dass** die Antennenspule gedruckt oder gewickelt ist.

12. Datenträger nach einem der vorhergehenden Ansprüche, **dadurch gekennzeichnet, dass** die Lichtquelle (22) eine Leuchtdiode oder eine organische Leuchtdiode oder eine flächige lichtemittiernde Substanz ist.

13. Datenträger nach einem der vorhergehenden Ansprüche, **dadurch gekennzeichnet, dass** der Datenträger einen Chip (24) zur Datenverarbeitung aufweist.

14. Datenträger nach einem der vorhergehenden Ansprüche, **dadurch gekennzeichnet, dass** der Datenträger eine kontaktgebundene Schnittstelle zur Datenübertragung aufweist.

## Claims

1. A portable data carrier with a multilayer structure having an mark (18), wherein the data carrier in the interior has a light source (22) which is arranged below the mark (18), wherein the mark (18) is visible from the outside only when illuminated by the light source (22),
**characterized in that** between the mark (18) and the light source (22) an optical layer (20) is arranged which is adapted to distribute the light of the light source (22) uniformly over at least a part of the region of the mark (18).

2. The data carrier according to claim 1, **characterized in that** the thickness of the optical layer (20) determines a distance between the mark (18) and the light source (22), so that the light of the light source (22) is scattered or concentrated.

3. The data carrier according to any of the preceding claims, **characterized in that** fluorine pigments are arranged in the optical layer (20).

4. The data carrier according to any of the preceding claims, **characterized in that** the mark (18) is formed by at least one opening in a light non-transmissive coating.

5. The data carrier according to any of the preceding claims, **characterized in that** the mark (18) is arranged at a certain angle in the light non-transmissive coating, so that the mark (18) is visible for a viewer only at a certain viewing angle.

6. The data carrier according to any of the preceding claims, **characterized in that** the mark (18) is an image, a figure, a character, a letter, a word, a symbol and/or a number.

7. The data carrier according to any of the preceding claims, **characterized in that** the mark (18) is a watermark or a halftone pattern.

8. The data carrier according to any of the preceding claims, **characterized in that** the light non-transmissive layer (4, 6, 8, 10, 12) is a printed layer.

9. The data carrier according to any of the preceding claims, **characterized in that** the light non-transmissive layer (4, 6, 8, 10, 12) is composed of metal.

10. The data carrier according to any of the preceding claims, **characterized in that** an antenna coil is arranged in the data carrier, wherein the antenna coil serves for energy supply and as a contactless interface for data transmission.

11. The data carrier according to any of the preceding claims, **characterized in that** the antenna coil is printed or wound.

12. The data carrier according to any of the preceding claims, **characterized in that** the light source (22) is a light emitting diode or an organic light emitting diode or a flat light emitting substance.

13. The data carrier according to any of the preceding claims, **characterized in that** the data carrier has a chip (24) for data processing.

14. The data carrier according to any of the preceding claims, **characterized in that** the data carrier has a contact-type interface for data transmission.

## Revendications

1. Support de données portable ayant une structure multicouche comportant une marque (18), le support de données comportant en son sein une source de lumière (22) agencée sous la marque (18), cependant que la marque (18) n'est visible de l'extérieur que sous éclairage par la source de lumière (22), **caractérisé en ce que**, entre la marque (18) et la source de lumière (22), une couche optique (20) est agencée, laquelle est conçue pour répartir uniformément la lumière de la source de lumière (22) sur au moins une partie de la surface de la marque (18).

2. Support de données selon la revendication 1, **caractérisé en ce que** l'épaisseur de la couche optique (20) détermine un espacement entre la marque (18) et la source de lumière (22), de telle façon que la lumière de la source de lumière (22) est diffusée ou concentrée.

3. Support de données selon une des revendications précédentes, **caractérisé en ce que**, dans la couche optique (20), des pigments fluorés sont disposés.

4. Support de données selon une des revendications précédentes, **caractérisé en ce que** la marque (18) est constituée par au moins une ouverture dans un revêtement opaque.

5. Support de données selon une des revendications précédentes, **caractérisé en ce que** la marque (18) est agencée dans un angle déterminé dans le revêtement opaque, de telle façon que la marque (18) n'est reconnaissable pour un observateur que sous un certain angle d'observation.

6. Support de données selon une des revendications précédentes, **caractérisé en ce que** la marque (18) est une image, une figure, un caractère, une lettre, un mot, un symbole et/ou un chiffre.

7. Support de données selon une des revendications précédentes, **caractérisé en ce que** la marque (18) est un filigrane ou un motif en demi-teintes.

8. Support de données selon une des revendications précédentes, **caractérisé en ce que** la couche opaque (4, 6, 8, 10, 12) est une couche imprimée.

9. Support de données selon une des revendications précédentes, **caractérisé en ce que** la couche opaque (4, 6, 8, 10, 12) consiste en du métal.

10. Support de données selon une des revendications précédentes, **caractérisé en ce qu'**une bobine d'antenne est agencée dans le support de données, cependant que la bobine d'antenne sert à l'alimentation en énergie et en tant qu'interface sans contact destinée à la transmission de données.

11. Support de données selon une des revendications précédentes, **caractérisé en ce que** la bobine d'antenne est imprimée ou enroulée.

12. Procédé selon une des revendications précédentes, **caractérisé en ce que** la source de lumière (22) est une diode lumineuse ou une diode lumineuse organique ou une substance en forme de feuille émettrice de lumière.

13. Procédé selon une des revendications précédentes, **caractérisé en ce que** le support de données comporte une puce (24) destinée au traitement de données.

14. Procédé selon une des revendications précédentes, **caractérisé en ce que** le support de données comporte une interface avec contact destinée à la transmission de données.
